# EUROPÄISCHE PATENTSCHRIFT

(11) **EP 3 577 925 B1**
(45) Veröffentlichungstag und Bekanntmachung des Hinweises auf die Patenterteilung: **15.07.2026**
(21) Anmeldenummer: 18703761.9
(22) Anmeldetag: 05.02.2018
(51) Int. Cl.: H04W 8/22, H04W 24/02, H04W 28/18, H04W 8/24

(54) **KONFIGURATION ZUR ERMÖGLICHUNG EINER KOMMUNIKATION**
CONFIGURATION FOR REALIZING A COMMUNICATION
CONFIGURATION POUR EFFECTUER UNE COMMUNICATION

(30) Priorität: 03.02.2017 EP 17154593
(43) Veröffentlichungstag der Anmeldung: 11.12.2019
(73) Patentinhaber: Deutsche Telekom AG, 53113 Bonn (DE)
(72) Erfinder: KLATT, Axel, 50999 Köln (DE); FOCK, Gunnar, 53227 Bonn (DE)
(74) Vertreter: Schwöbel, Thilo K.
(86) Internationale Anmeldenummer: PCT/EP2018/052816
(87) Internationale Veröffentlichungsnummer: WO 2018/141966

(56) Entgegenhaltungen:
- EP-A1- 2 816 830
- WO-A1-2016/185758
- US-A1- 2016 242 072
- US-A1- 2017 238 349
- CISCO SYSTEMS ET AL: "Consolidated overall CN architecture option", vol. SA WG2, no. Vienna, Austria; 20160711 - 20160715, 17 July 2016 (2016-07-17), XP051121821, Retrieved from the Internet <URL:http://www.3gpp.org/ftp/tsg_sa/WG2_Arch/TSGS2_116_Vienna/Docs/> [retrieved on 20160717]
- SAMSUNG: "Solution for Network Slice Selection based on the NG UE's service context", vol. SA WG2, no. Nanjing, P.R. China; 20160523 - 20160527, 23 May 2016 (2016-05-23), XP051109373, Retrieved from the Internet <URL:http://www.3gpp.org/ftp/Meetings_3GPP_SYNC/SA2/Docs/> [retrieved on 20160523]
- CMCC: "Design principles for new radio", vol. RAN WG1, no. Busan, Korea; 20160411 - 20160415, 2 April 2016 (2016-04-02), XP051080393, Retrieved from the Internet <URL:http://www.3gpp.org/ftp/tsg_ran/WG1_RL1/TSGR1_84b/Docs/> [retrieved on 20160402]

## Beschreibung

### Stand der Technik

Die Erfindung betrifft ein Verfahren zur Konfiguration einer Kommunikation oder eines Kommunikationskanals eines Telekommunikationsendgeräts in einem Telekommunikationsnetz und/oder zur Konfiguration eines Telekommunikationsendgeräts zur Bereitstellung wenigstens eines Kommunikationsdienstes in einem Telekommunikationsnetz oder durch ein Telekommunikationsnetz.

Weiterhin betrifft die Erfindung ein System zur Konfiguration einer Kommunikation oder eines Kommunikationskanals eines Telekommunikationsendgeräts in einem Telekommunikationsnetz und/oder zur Konfiguration eines Telekommunikationsendgeräts zur Bereitstellung wenigstens eines Kommunikationsdienstes in einem Telekommunikationsnetz oder durch ein Telekommunikationsnetz.

Ferner betrifft die Erfindung ein Telekommunikationsendgerät zur Konfiguration einer Kommunikation oder eines Kommunikationskanals des Telekommunikationsendgeräts in einem Telekommunikationsnetz und/oder zur Konfiguration des Telekommunikationsendgeräts zur Bereitstellung wenigstens eines Kommunikationsdienstes in einem Telekommunikationsnetz oder durch ein Telekommunikationsnetz.

Ferner betrifft die Erfindung auch ein Computerprogramm mit Programmcodemitteln, mit deren Hilfe die Schritte eines Verfahrens nach einer Ausführungsform der Erfindung durchführbar sind, wenn das Computerprogramm auf einer programmierbaren Einrichtung, insbesondere als Teil des Systems, oder auf dem Telekommunikationsendgerät ausgeführt wird.

Des Weiteren betrifft die Erfindung auch ein Computerprogrammprodukt mit einem computerlesbaren Medium und einem auf dem computerlesbaren Medium gespeicherten Computerprogramm mit Programmcodemitteln zur Konfiguration einer Kommunikation oder eines Kommunikationskanals eines Telekommunikationsendgeräts in einem Telekommunikationsnetz und/oder zur Konfiguration eines Telekommunikationsendgeräts zur Bereitstellung wenigstens eines Kommunikationsdienstes in einem Telekommunikationsnetz oder durch ein Telekommunikationsnetz, die dazu geeignet sind, dass die Schritte eines Verfahrens nach einer Ausführungsform der Erfindung durchführbar sind, wenn das Computerprogramm auf einer programmierbaren Einrichtung, insbesondere als Teil des Telekommunikationsnetzes oder auf dem Telekommunikationsendgerät ausgeführt wird.

Üblicherweise wird eine direkte Konfiguration eines Benutzerschicht-Funkübertragungskanals oder eines Telekommunikationsendgeräts (beispielsweise mit Bezug auf die Datenübertragung/Kommunikation in der Benutzerschicht) durch das Radio-Access-Netzwerk (RAN) mittels Radio Resource Control (RRC)-Signalisierung vorgenommen, wobei eine der Steuerungsschicht zugeordnete Entität des Telekommunikationsnetzes (beispielsweise eine Datenübertragungseinrichtung einer Basisstationseinrichtung des Telekommunikationsnetzes) eine zumindest teilweise der Benutzerschicht zugeordneten Entität des Telekommunikationsgeräts konfiguriert (bzw. einen Benutzerschicht-Funkübertragungskanals konfiguriert). Ein Nachteil einer solchen Methode ist beispielsweise, dass das Telekommunikationsnetz Informationen über die speziellen Gerätefähigkeiten des einzelnen Telekommunikationsendgerätes haben muss, um eine Konfiguration eines Benutzerschicht-Funkübertragungskanals oder eine Konfiguration einer den Benutzerschicht-Funkübertragungskanal nutzenden Kommunikation und/oder eine Konfiguration des Telekommunikationsendgeräts (beispielsweise mit Bezug auf die Datenübertragung/Kommunikation in der Benutzerschicht) vornehmen zu können. Die EP 2816830 A1 zeigt ein bekanntes Verfahren.

WO 2016/185758 A1 zeigt Kommunikationsverfahren zwischen UE und Basisstation. Das UE sendet ein Fähigkeitsmeldesignal an die Basisstation eNB mit Qualitätsinformationen sowie der Anzahl der Funk-Träger und logischen Kanälen, die das UE gleichzeitig aktivieren kann. Das Fähigkeitsmeldesignal kann beispielsweise ein RRC-Signal (z. B. UE-Fähigkeitsinformationen), ein MAC-Signal oder ein Signal der physikalischen Schicht sein. Darüber hinaus kann beispielsweise eine bestimmte UE-Kategorie, die ein MTC-Endgerät angibt, im voraus zwischen der Basisstation eNB und dem UE definiert werden.

US 2016/242072 A1 zeigt Verfahren, Systeme und Vorrichtungen zur Verarbeitung übergroßer Verbindungsaufbau-Nachrichten. Ein UE kann die Größe einer Verbindungsaufbau-Nachricht ( RRC-Set-Up Complete) identifizieren, die mit einer oder mehreren UE-Fähigkeitsinformationen verbunden ist. Wenn das UE feststellt, dass die geschätzte Zeit zum Übertragen der Verbindungsaufbau-Nachricht größer als der Schwellenwert ist, kann das UE mindestens einen Teil der Verbindungsaufbau-Nachricht entfernen und eine modifizierte Verbindungsaufbau-Nachricht übertragen. Das UE kann Informationen zur Funkzugangsfähigkeit des UE als Teil der RRC-Setup-Complete Nachricht an den RNC senden. Die UE-Fähigkeitsinformationen können UE-Funkfähigkeiten, UE NAS Fähigkeiten und Klassenkennzeicheninformationen umfassen. Im 3GPP-Standard kann ein UE während des Aufbaus der RRC-Verbindung Informationen zur Funkfähigkeit melden. In einigen Beispielen kann ein UE zusätzlich zur Meldung eines vollständigen Satzes von UE-Funkfähigkeitsinformationen in der RRC-Verbindungsaufbau-Abschlussmeldung auch einen kleinen Satz zusätzlicher UE-Fähigkeiten (z. B. Vollduplex-/Halbduplex-UE-Fähigkeiten) melden, die zum ordnungsgemäßen Aufbau von Signalisierungsfunkübertragungswegen verwendet werden können.

### Offenbarung der Erfindung

Der Erfindung liegt die Aufgabe zugrunde, ein Verfahren zur Konfiguration einer Kommunikation oder eines Kommunikationskanals eines Telekommunikationsendgeräts in einem Telekommunikationsnetz und/oder zur Konfiguration eines Telekommunikationsendgeräts zur Bereitstellung wenigstens eines Kommunikationsdienstes in einem Telekommunikationsnetz oder durch ein Telekommunikationsnetz zu verbessern und zu vereinfachen.

Diese Aufgabe wird erfindungsgemäß gelöst durch ein Verfahren gemäß Anspruch 1, ein System gemäß Anspruch 6, ein Telekommunikationsendgerät gemäß Anspruch 7, ein Computerprogramm gemäß Anspruch 9 sowie ein Computerprogrammprodukt gemäß Anspruch 10. Vorteilhafte Ausführungsformen sind in den abhängigen Ansprüchen definiert.

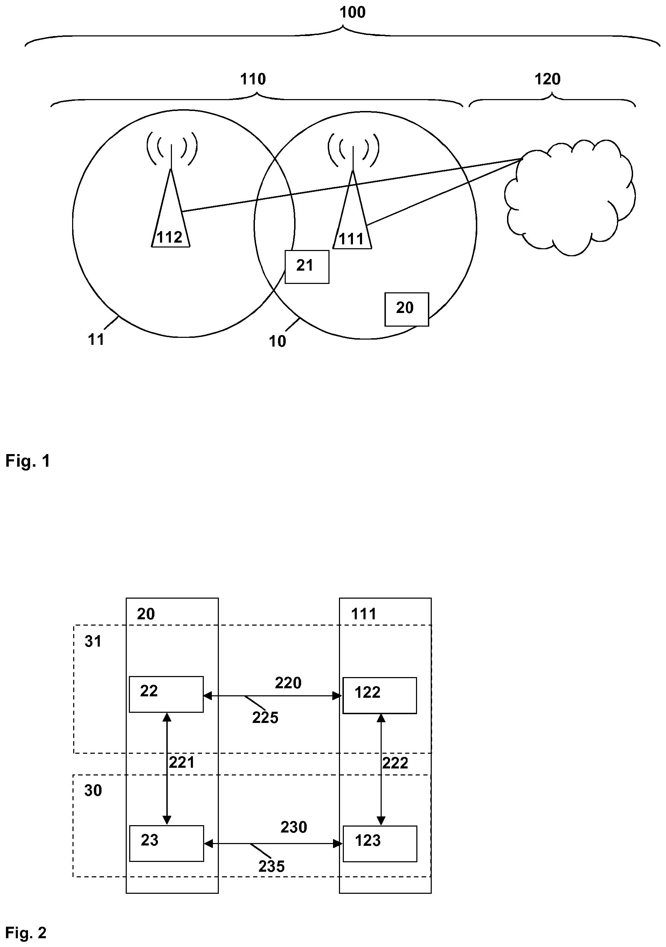

Im Folgenden wird die Erfindung anhand von Figur 2 und den dazugehörigen Passagen in der Beschreibung näher erläutert. Die übrigen Ausführungsformen, Aspekte und Beispiele, die im Folgenden offenbart werden, dienen der Veranschaulichung und dem besseren Verständnis der Erfindung.

Erfindungsgemäß ist es hierdurch in vorteilhafter Weise möglich, die Konfiguration eines Telekommunikationsendgerätes mit Bezug auf die Bereitstellung eines Kommunikationsdienstes bzw. die Konfiguration eines Kommunikationskanals zwischen dem Telekommunikationsgerät und einer Entität des Telekommunikationsnetzes bzw. dem Telekommunikationsnetz zu verbessern. Hierbei wird in vorteilhafter Weise eine erhöhte Trennung zwischen Steuerungsschicht und Benutzerschicht hergestellt, wobei eine Basisstationseinrichtung eine erste Datenübertragungseinrichtung als Teil einer Steuerungsschicht der Basisstationseinrichtung (bzw. eine erste Datenübertragungseinrichtung, die (größtenteils) der Steuerungsschicht zugeordnet ist) und eine zweite Datenübertragungseinrichtung als Teil einer Benutzerschicht der Basisstationseinrichtung (bzw. eine zweite Datenübertragungseinrichtung, die (größtenteils) der Benutzerschicht zugeordnet ist) aufweist, wobei das Telekommunikationsendgerät eine weitere erste Datenübertragungseinrichtung als Teil einer Steuerungsschicht des Telekommunikationsendgeräts (bzw. eine weitere erste Datenübertragungseinrichtung, die (größtenteils) der Steuerungsschicht zugeordnet ist) und eine weitere zweite Datenübertragungseinrichtung als Teil einer Benutzerschicht des Telekommunikationsendgeräts (bzw. eine weitere zweite Datenübertragungseinrichtung, die (größtenteils) der Benutzerschicht zugeordnet ist) aufweist. Hierbei ist es möglich, dass ein Signalisierungsfunkkanal zur Übertragung von als Teil von oder innerhalb der Steuerungsschicht übertragenen Steuerungsinformationsdaten vorzugsweise zwischen der erste Datenübertragungseinrichtung und der weiteren ersten Datenübertragungseinrichtung vorhanden ist. Es ist hierbei erfindungsgemäß in vorteilhafter Weise möglich, dass die weitere erste Datenübertragungseinrichtung und die weitere zweite Datenübertragungseinrichtung vom Telekommunikationsendgerät umfasst werden (bzw. im oder am Telekommunikationsgerät angeordnet sind). Hierbei ergibt sich des Weiteren die Möglichkeit, dass die Steuerungsschicht und die Benutzerschicht (bzw. die Kommunikation der Steuerungsschicht und der Benutzerschicht) vom Telekommunikationsnetz bis zum Telekommunikationsendgerät hin getrennt ist. Es ist hierbei in vorteilhafter Weise ebenso möglich, dass ein Benutzerschicht-Funkübertragungskanal zur Übertragung von als Teil von oder innerhalb der Benutzerschicht übertragenen Nutzerdaten zwischen der zweiten Datenübertragungseinrichtung und der weiteren zweiten Datenübertragungseinrichtung, vorhanden ist bzw. bereitgestellt wird. Erfindungsgemäß ist es hierbei möglich, dass in einem ersten Schritt, insbesondere mit dem Ziel der Konfiguration des Benutzerschicht-Funkübertragungskanal (und/oder der weiteren zweiten Datenübertragungseinrichtung) oder zur Konfiguration einer den Benutzerschicht-Funkübertragungskanal nutzenden Kommunikation und/oder zur Konfiguration des Telekommunikationsendgeräts (bzw. der Bereitstellung und Einrichtung eines Benutzerschicht-Funkübertragungskanal oder der Bereitstellung und Einrichtung einer den Benutzerschicht-Funkübertragungskanal nutzenden Kommunikation und/oder zur Konfiguration des Telekommunikationsendgeräts), - zwischen der ersten Datenübertragungseinrichtung und der weiteren ersten Datenübertragungseinrichtung - ein Austausch der Steuerungsinformationsdaten stattfindet. Des Weiteren ist es dadurch in vorteilhafter Weise möglich, dass in einem auf den ersten Schritt folgenden zweiten Schritt die weitere zweite Datenübertragungseinrichtung des Telekommunikationsendgeräts in Abhängigkeit der Steuerungsinformationsdaten (und vorzugsweise zusätzlich dazu in Abhängigkeit von Informationen bezüglich spezieller Gerätefähigkeiten des Telekommunikationsgeräts, die der ersten Datenübertragungseinrichtung nicht bekannt sind) durch die weitere erste Datenübertragungseinrichtung konfiguriert wird. Hierbei ist es erfindungsgemäß möglich, dass eine Konfiguration der weiteren zweiten Datenübertragungseinrichtung durch eine andere dem Telekommunikationsendgerät zugeordnete Entität (bzw. durch die weitere erste Datenübertragungseinrichtung) durchgeführt wird. Dies bietet gegenüber aus dem Stand der Technik bekannten Verfahren, in denen die Konfiguration des Benutzerschicht-Funkübertragungskanals bzw. der weiteren zweiten Datenübertragungseinrichtung typischerweise durch eine Entität des Telekommunikationsnetzwerks, bzw. die erste Datenübertragungseinrichtung der Basisstationseinrichtung des Telekommunikationsnetzwerks vorgenommen wird, - unter anderen - den Vorteil, dass das Telekommunikationsnetzwerk (insbesondere Entitäten des Zugangsnetzes) keine Informationen über die Benutzerschicht-Fähigkeiten des Telekommunikationsendgerätes haben muss (die die speziellen Gerätefähigkeiten des Telekommunikationsgeräts angeben) bzw. dass dem Telekommunikationsnetzwerk (insbesondere Entitäten des Zugangsnetzes) keine Informationen über die (speziellen) Benutzerschicht-Fähigkeiten des Telekommunikationsendgerätes übermittelt werden müssen, um eine Konfiguration eines Benutzerschicht-Funkübertragungskanal (bzw. einer weiteren zweiten Datenübertragungseinrichtung) durchzuführen. Es ist hierbei erfindungsgemäß möglich, dass diverse Informationen betreffend die speziellen Gerätefähigkeiten des Telekommunikationsgeräts, z.B., Informationen zu den Processing-Fähigkeiten des Telekommunikationsendgerätes, somit nur intern im Telekommunikationsendgerät zwischen dessen Benutzerschicht (bzw. der weiteren zweiten Datenübertragungseinrichtung) und der Steuerungsschicht (bzw. der weiteren ersten Datenübertragungseinrichtung) verfügbar sind und/oder ausgetauscht werden.

Gemäß einer Ausführungsform der Erfindung ist es vorgesehen, dass die weitere zweite Datenübertragungseinrichtung lokal und innerhalb des Telekommunikationsendgeräts konfiguriert wird und/oder dass die Konfiguration des Telekommunikationsendgeräts direkt zwischen der ersten Datenübertragungseinrichtung und der weiteren ersten Datenübertragungseinrichtung unter Verwendung des Signalisierungsfunkkanals erfolgt und lediglich indirekt zwischen der zweiten Datenübertragungseinrichtung und der weiteren zweiten Datenübertragungseinrichtung erfolgt,
wobei insbesondere die Konfiguration der weiteren zweiten Datenübertragungseinrichtung innerhalb des Telekommunikationsendgeräts erfolgt, nachdem die Steuerungsinformationsdaten bereits zwischen der Basisstationseinrichtung und dem Telekommunikationsendgerät übertragen oder ausgetauscht sind.

Hierbei ist es gemäß einer Ausführungsform der Erfindung in vorteilhafter Weise möglich, dass die weitere zweite Datenübertragungseinrichtung lokal beispielsweise durch die (oder unter Zuhilfenahme der) weitere erste Datenübertragungseinrichtung konfiguriert wird, und die unmittelbare Konfiguration der weiteren zweiten Datenübertragungseinrichtung somit vorteilhaft innerhalb des Telekommunikationsendgeräts erfolgt, insbesondere ohne dass ein (direkter) Kanal zwischen der ersten Datenübertragungseinrichtung und der weiteren zweiten Datenübertragungseinrichtung verwendet wird. Hierbei ist es des Weiteren möglich, dass die Konfiguration des Telekommunikationsendgeräts (z.B., die Konfiguration einer Kommunikation oder eines Kommunikationskanals eines Telekommunikationsendgeräts in einem Telekommunikationsnetz und/oder die Konfiguration eines Telekommunikationsendgeräts zur Bereitstellung wenigstens eines Kommunikationsdienstes in einem Telekommunikationsnetz oder durch ein Telekommunikationsnetz) direkt zwischen der ersten Datenübertragungseinrichtung und der weiteren ersten Datenübertragungseinrichtung unter Verwendung des Signalisierungsfunkkanals erfolgt und lediglich indirekt (also insbesondere ohne eine direkte Datenübermittlung der ersten Datenübertragungseinrichtung zur weiteren zweiten Datenübertragungseinrichtung) zwischen der zweiten Datenübertragungseinrichtung und der weiteren zweiten Datenübertragungseinrichtung erfolgt.

Gemäß einer Ausführungsform der Erfindung ist es vorgesehen, dass die im ersten Schritt zwischen der ersten Datenübertragungseinrichtung und der weiteren ersten Datenübertragungseinrichtung ausgetauschten Steuerungsinformationsdaten sich auf die für die Konfiguration des Benutzerschicht-Funkübertragungskanal oder zur Konfiguration der den Benutzerschicht-Funkübertragungskanal nutzenden Kommunikation zur Bereitstellung des wenigstens einen Kommunikationsdienstes bezieht.

Hierbei ist es gemäß einer Ausführungsform der Erfindung in vorteilhafter Weise möglich, dass die Steuerungsinformationsdaten sich auf die für die Konfiguration des Benutzerschicht-Funkübertragungskanal oder zur Konfiguration der den Benutzerschicht-Funkübertragungskanal nutzenden Kommunikation zur Bereitstellung des wenigstens einen Kommunikationsdienstes beziehen, bevorzugt aber - für sich genommen - nicht ausreichen, um eine solche Konfiguration vorzunehmen, wobei die Konfiguration insbesondere durch die Steuerungsinformationsdaten und zusätzliche die Gerätefähigkeiten des Telekommunikationsendgeräts betreffende Informationen, die der weiteren ersten Datenübertragungseinrichtung zugänglich sind, durchführbar ist.

Gemäß einer Ausführungsform der Erfindung ist es vorgesehen, dass die im ersten Schritt zwischen der ersten Datenübertragungseinrichtung und der weiteren ersten Datenübertragungseinrichtung ausgetauschten Steuerungsinformationsdaten - im Rahmen des für die Konfiguration der Kommunikation oder des Kommunikationskanals zur Bereitstellung des wenigstens einen Kommunikationsdienstes Benötigten - unabhängig von den speziellen Gerätefähigkeiten des Telekommunikationsendgeräts ist.

Hierbei ist es erfindungsgemäß möglich, dass die weitere erste Datenübertragungseinrichtung als Teil der Steuerungsschicht des Telekommunikationsendgerätes während oder zu Beginn des ersten Schritts einen generischen Fähigkeits-Report als Teil der Steuerungsinformationsdaten an das Telekommunikationsnetz (bzw. an die erste Datenübertragungseinrichtung) sendet, wobei Benutzerschicht-spezifische Details und/oder spezielle Gerätefähigkeiten gegenüber der ersten Datenübertragungseinrichtung (bzw. der Basisstationseinrichtung und dem Zugangsnetz) verborgen bleiben, also nicht in den Steuerungsinformationsdaten enthalten sind. Hierbei ist es des Weiteren möglich, dass während des ersten Schritts (beispielsweise nach dem Senden des generischen Fähigkeits-Reports von der weiteren ersten Datenübertragungseinrichtung zur ersten Datenübertragungseinrichtung) die erste Datenübertragungseinrichtung Steuerungsinformationsdaten (oder einen Teil von Steuerungsinformationsdaten) an die weitere erste Datenübertragungseinrichtung sendet, wobei die an die weitere erste Datenübertragungseinrichtung gesendeten Steuerungsinformationsdaten unabhängig von den speziellen Gerätefähigkeiten des Telekommunikationsendgeräts (insbesondere Telekommunikationsendgerät unspezifisch) sind, aber vorzugsweise dafür ausreichen, dass die weitere erst Datenübertragungseinrichtung die weitere zweite Datenübertragungseinrichtung und/oder den Benutzerschicht-Funkübertragungskanal konfigurieren kann (unter Zuhilfenahme von Informationen bezüglich der speziellen Gerätefähigkeiten, die der weiteren ersten Datenübertragungseinrichtung zugänglich sind, vorzugsweise dadurch, dass sie im (als Teil des) Telekommunikationsendgerät angeordnet ist).

Gemäß einer Ausführungsform der Erfindung ist es vorgesehen, dass die im ersten Schritt zwischen der ersten Datenübertragungseinrichtung der weiteren ersten Datenübertragungseinrichtung ausgetauschten Steuerungsinformationsdaten eine generische Fähigkeitsinformation bezüglich der Gerätefähigkeiten des Telekommunikationsendgeräts umfasst.

Gemäß einer Ausführungsform der Erfindung ist es vorgesehen, dass die im ersten Schritt zwischen der ersten Datenübertragungseinrichtung und der weiteren ersten Datenübertragungseinrichtung ausgetauschten Steuerungsinformationsdaten eine generische Konfigurationsanforderung bezüglich der Gerätefähigkeiten des Telekommunikationsendgeräts und/oder bezüglich des Kommunikationskanals zur Bereitstellung des wenigstens einen Kommunikationsdienstes umfasst.
Sowohl dadurch,
-- dass die ausgetauschten Steuerungsinformationsdaten eine generische Fähigkeitsinformation bezüglich der Gerätefähigkeiten des Telekommunikationsendgeräts umfasst, als auch dadurch,
-- dass die Steuerungsinformationsdaten eine generische Konfigurationsanforderung bezüglich der Gerätefähigkeiten des Telekommunikationsendgeräts und/oder bezüglich des Kommunikationskanals zur Bereitstellung des wenigstens einen Kommunikationsdienstes umfasst,
ist es insbesondere vorteilhaft möglich und vorgesehen, dass es zu einer direkten Konfiguration der Benutzerschicht (d.h. einer user plane Konfiguration) innerhalb des Telekommunikationsendgeräts kommt, ohne dass das Radio Access Netz (d.h. das Funkzugangsnetz) alle Einzelheiten der Fähigkeiten des Telekommunikationsendgeräts haben muss; damit geht einher, dass das Radio Access Netz auch keine konkrete Vorgabe zur Benutzung solcher Einzelheiten der Fähigkeiten des Telekommunikationsendgerät machen kann bzw. gemäß der vorliegenden Erfindung tatsächlich macht. Das Funkzugangsnetz (bzw. die Basisstationseinrichtung bzw. weitere Netzknoten des Funkzugangsnetzes bzw. allgemein des Telekommunikationsnetzes) muss somit (zumindest hinsichtlich bestimmter, bei der Benutzung des Telekommunikationsendgeräts zu benutzender konkreter Fähigkeiten) keinerlei Informationen im Einzelnen über die genauen (bzw. spezifischen) Benutzerschicht-Fähigkeiten (bzw. User Plane-Fähigkeiten) des einzelnen Telekommunikationsendgeräts haben, sondern es ist vorgesehen, dass die Steuerungsschicht (bzw. die Control Plane) des Telekommunikationsendgeräts (d.h. die weitere zweite Datenübertragungseinrichtung) mit dem Funkzugangsnetz (bzw. der Basisstationseinrichtung) lediglich eine generische Fähigkeitsinformation (bezüglich der Gerätefähigkeiten des Telekommunikationsendgeräts) und/oder lediglich eine generische Konfigurationsanforderung (bezüglich der Gerätefähigkeiten des Telekommunikationsendgeräts und/oder bezüglich des Kommunikationskanals) austauscht (d.h. die Steuerungsinformationsdaten umfassen lediglich eine generische Fähigkeitsinformation und/oder eine generische Konfigurationsanforderung) - beispielsweise dadurch, dass solch eine generische Fähigkeitsinformation, etwa als ein generischer Capability-Report (d.h. einen generischen Bericht über die Fähigkeiten des Telekommunikationsendgeräts), an das Funkzugangsnetz (RAN) gesendet wird, wobei bei einem solchen Capability-Report spezifische Details der Benutzerschicht dem Funkzugangsnetz bzw. der Basisstationseinrichtung gegenüber verborgen bleiben können. Somit wird erfindungsgemäß die weitere zweite Datenübertragungseinrichtung lokal und innerhalb des Telekommunikationsendgeräts konfiguriert.

Gemäß bekannter Verfahren zur Konfiguration einer Kommunikation oder eines Kommunikationskanals eines Telekommunikationsendgeräts in einem Telekommunikationsnetz ist es vorgesehen, dass das Netz die entsprechenden Capability Informationen des Telekommunikationsendgeräts haben muss, um dann entsprechend zu konfigurieren die Kommunikation (netzseitig) zu konfigurieren. Diese vollständige Transparenz (des Telekommunikationsendgeräts gegenüber dem Telekommunikationsnetz bzw. dem Funkzugangsnetz) ist bei der vorliegenden Erfindung nicht notwendig und auch nicht vorgesehen bzw. erwünscht.

Im Folgenden soll dies für das Beispiel der Verwendung einer Sprachkommunikation unter Verwendung einer menschlichen Sprache erläutert werden: Das Telekommunikationsnetz muss nicht (und soll nicht zwingend) wissen, was das Telekommunikationsendgerät (spezifisch und konkret) kann (etwa im Beispiel, welche konkrete Sprachfähigkeit aus der Menge {Deutsch; English; Französisch; Kroatisch} vorhanden ist), sondern nur, dass das Telekommunikationsendgerät (etwa) eine {menschliche Sprache} beherrscht. Somit ist es erfindungsgemäß in dieser Situation möglich (unter Nutzung der ersten Datenübertragungseinrichtung der Basisstationseinrichtung und der weiteren ersten Datenübertragungseinrichtung des Telekommunikationsendgeräts) dem Telekommunikationsendgerät (insbesondere der Steuerungsschicht des Telekommunikationsendgeräts, d.h. der User Equipment Control Plane entity) zu signalisieren (als Teil einer generischen Fähigkeitsinformation bzw. als Teil einer generischen Konfigurationsanforderung): "es soll mit (bzw. in) einer menschlichen Sprache kommunizieren werden" ohne explizit festzulegen, welche konkrete Sprache oder welche Auswahl an Sprachen konkret benutzt werden soll. Die Steuerungsschicht des Telekommunikationsendgeräts, d.h. die User Equipment Control Plane entity, kann nun mittels weiterer interner Kommunikation innerhalb des Telekommunikationsendgeräts (etwa mit einer weiteren Konfigurationseinheit) kommunizieren und hier aushandeln, ob (etwa) eine Sprache mit Alphabetschrift oder eine Sprache mit Silbenschrift zur Kommunikation verwendet werden soll. Die Entscheidung hierüber (die insbesondere durch eine weitere interne Einheit bzw. Kommunikationseinheit getroffen wird) kann etwa davon abhängig sein, welche Prozessing-Ressourcen zur Verfügung stehen (etwa unter Verwendung eines Hypervisors). Das Telekommunikationsnetz (bzw. das Funkzugangsnetz) kann somit der Steuerungsschicht des Telekommunikationsendgeräts eine generische Konfigurationsaufforderung übermitteln (etwa: "ich will eine Sprachverbindung") und innerhalb des Telekommunikationsendgeräts wird diese (generische) Konfigurationsaufforderung in eine spezifische (bzw. konkrete) Konfiguration der Benutzerschicht umgewandelt (etwa: "nehmen wir Kroatisch"). Somit sind Details und Einzelheiten (wie etwa Processing-Capabilites oder sonstige Endgeräte-Fähigkeiten) nur intern im Telekommunikationsendgerät zwischen dessen Benutzer- und Steuerungsschicht verfügbar; das Telekommunikationsendgerät überstützt dann entsprechend auch im Telekommunikationsnetz definierte Funktionen über eine (telekommunikationsendgerätinterne) Entscheidungseinheit (etwa einen Hypervisor, der für die entsprechende Ressourcenvergabe verantwortlich ist), etwa nach dem nachfolgenden Muster: "kann ich eine Sprachverbung aufbauen?" - "Ja, aber benutze eine Sprache mit Alphabetschrift (wie kroatisch) und nicht eine Sprache mit Silbenschrift (wie Chinesisch)!". Hierdurch ist es ebenfalls vorteilhaft möglich, dass mittels eines solchen strikten Trennungsprinzips eine Mehrzahl von UE Instanzen (d.h. Telekommunikationsendgerät instanzen) definiert werden können, welche eine jeweils unabhängige Kommunikation mittels der gleichen generischen Hardware des Terminals (bzw. des Telekommunikationsendgeräts) ermöglichen. Beispiele paralleler verschiedenartiger Konfigurationen sind unterschiedliche Services mit sehr unterschiedlichen Serviceanforderungen.

Gemäß einer Ausführungsform der Erfindung ist es vorgesehen, dass die zweite Datenübertragungseinrichtung eine erste Funkverbindungssteuerungseinrichtung und eine erste Mediumzugangssteuerungseinrichtung und eine erste Einrichtung zur Bereitstellung und/oder Implementierung des physikalischen Funkübertragungskanals und eine erste physikalische Schicht aufweist und
dass die weitere zweite Datenübertragungseinrichtung eine zweite Funkverbindungssteuerungseinrichtung und eine zweite Mediumzugangssteuerungseinrichtung und eine zweite Einrichtung zur Bereitstellung und Implementierung des physikalischen Funkübertragungskanals und eine zweite physikalische Schicht aufweist.

Hierbei ist es gemäß einer Ausführungsform der Erfindung möglich, dass die zweite Datenübertragungseinrichtung und die weitere zweite Datenübertragungseinrichtung jeweils Protokollstapel (erste und zweite Funkverbindungssteuerungseinrichtung (radio link control (RLC)), erste und zweite Mediumzugangssteuerungseinrichtung (medium access control (MAC)), erste und zweite Einrichtung zur Bereitstellung und/oder Implementierung des physikalischen Funkübertragungskanals, erste und zweite physikalische Schicht (physical layer (PHY)) gemäß des Open Systems Interconnection (OSI) Modells (insbesondere Schichten 1 und 2 gemäß des Open Systems Interconnection Modells) aufweist.

Ferner wird die Aufgabe erfindungsgemäß gelöst durch ein System gemäß Anspruch 8.

Erfindungsgemäß ist es hierdurch in vorteilhafter Weise möglich, die Konfiguration eines Telekommunikationsendgerätes mit Bezug auf die Bereitstellung eines Kommunikationsdienstes bzw. die Konfiguration eines Kommunikationskanals zwischen dem Telekommunikationsgerät und einer Entität des Telekommunikationsnetzes bzw. dem Telekommunikationsnetz zu verbessern. Hierbei wird in vorteilhafter Weise eine erhöhte Trennung zwischen Steuerungsschicht und Benutzerschicht hergestellt, wobei eine Basisstationseinrichtung eine erste Datenübertragungseinrichtung als Teil einer Steuerungsschicht der Basisstationseinrichtung (bzw. eine erste Datenübertragungseinrichtung, die (größtenteils) der Steuerungsschicht zugeordnet ist) und eine zweite Datenübertragungseinrichtung als Teil einer Benutzerschicht der Basisstationseinrichtung (bzw. eine zweite Datenübertragungseinrichtung, die (größtenteils) der Benutzerschicht zugeordnet ist) aufweist, wobei das Telekommunikationsendgerät eine weitere erste Datenübertragungseinrichtung als Teil einer Steuerungsschicht des Telekommunikationsendgeräts (bzw. eine weitere erste Datenübertragungseinrichtung, die (größtenteils) der Steuerungsschicht zugeordnet ist) eine und eine weitere zweite Datenübertragungseinrichtung als Teil einer Benutzerschicht des Telekommunikationsendgeräts (bzw. eine weitere zweite Datenübertragungseinrichtung, die (größtenteils) der Benutzerschicht zugeordnet ist) aufweist. Hierbei ist es möglich, dass ein Signalisierungsfunkkanal zur Übertragung von als Teil von oder innerhalb der Steuerungsschicht übertragenen Steuerungsinformationsdaten vorzugsweise zwischen der erste Datenübertragungseinrichtung und der weiteren ersten Datenübertragungseinrichtung vorhanden ist. Es ist hierbei erfindungsgemäß in vorteilhafter Weise möglich, dass die weitere erste Datenübertragungseinrichtung und die weitere zweite Datenübertragungseinrichtung vom Telekommunikationsendgerät umfasst werden (bzw. im oder am Telekommunikationsgerät angeordnet sind). Hierbei ergibt sich des Weiteren die Möglichkeit, dass die Steuerungsschicht und die Benutzerschicht (bzw. die Kommunikation der Steuerungsschicht und der Benutzerschicht) vom Telekommunikationsnetz bis zum Telekommunikationsendgerät hin getrennt ist. Es ist hierbei in vorteilhafter Weise ebenso möglich, dass ein Benutzerschicht-Funkübertragungskanal zur Übertragung von als Teil von oder innerhalb der Benutzerschicht übertragenen Nutzerdaten zwischen der zweiten Datenübertragungseinrichtung und der weiteren zweiten Datenübertragungseinrichtung, vorhanden ist bzw. bereitgestellt wird. Erfindungsgemäß ist es hierbei möglich, dass in einem ersten Schritt, insbesondere mit dem Ziel der Konfiguration des Benutzerschicht-Funkübertragungskanal (und/oder der weiteren zweiten Datenübertragungseinrichtung) oder zur Konfiguration einer den Benutzerschicht-Funkübertragungskanal nutzenden Kommunikation und/oder zur Konfiguration des Telekommunikationsendgeräts (bzw. der Bereitstellung und Einrichtung eines Benutzerschicht-Funkübertragungskanal oder der Bereitstellung und Einrichtung einer den Benutzerschicht-Funkübertragungskanal nutzenden Kommunikation und/oder zur Konfiguration des Telekommunikationsendgeräts), - zwischen der ersten Datenübertragungseinrichtung und der weiteren ersten Datenübertragungseinrichtung - ein Austausch der Steuerungsinformationsdaten stattfindet. Des Weiteren ist es dadurch in vorteilhafter Weise möglich, dass in einem auf den ersten Schritt folgenden zweiten Schritt die weitere zweite Datenübertragungseinrichtung des Telekommunikationsendgeräts in Abhängigkeit der Steuerungsinformationsdaten (und vorzugsweise zusätzlich dazu in Abhängigkeit von Informationen bezüglich spezieller Gerätefähigkeiten des Telekommunikationsgeräts, die der ersten Datenübertragungseinrichtung nicht bekannt sind) durch die weitere erste Datenübertragungseinrichtung konfiguriert wird. Hierbei ist es erfindungsgemäß möglich, dass eine Konfiguration der weiteren zweiten Datenübertragungseinrichtung durch eine andere dem Telekommunikationsendgerät zugeordnete Entität (bzw. durch die weitere erste Datenübertragungseinrichtung) durchgeführt wird. Dies bietet gegenüber aus dem Stand der Technik bekannten Verfahren, in denen die Konfiguration des Benutzerschicht-Funkübertragungskanal bzw. der weiteren zweiten Datenübertragungseinrichtung typischerweise durch eine Entität des Telekommunikationsnetzwerks, bzw. erste Datenübertragungseinrichtung der Basisstationseinrichtung des Telekommunikationsnetzwerks vorgenommen wird, - unter anderen - den Vorteil, dass das Telekommunikationsnetzwerk (insbesondere Entitäten des Zugangsnetzes) keine Informationen über die Benutzerschicht-Fähigkeiten des Telekommunikationsendgerätes haben muss (die die speziellen Gerätefähigkeiten des Telekommunikationsgeräts angeben) bzw. dass dem Telekommunikationsnetzwerk (insbesondere Entitäten des Zugangsnetzes) keine Informationen über die (speziellen) Benutzerschicht-Fähigkeiten des Telekommunikationsendgerätes übermittelt werden müssen, um eine Konfiguration eines Benutzerschicht-Funkübertragungskanal (bzw. einer weiteren zweiten Datenübertragungseinrichtung) durchzuführen. Es ist hierbei erfindungsgemäß möglich, dass diverse Informationen betreffend die speziellen Gerätefähigkeiten des Telekommunikationsgeräts, z.B., Informationen zu den Processing-Fähigkeiten des Telekommunikationsendgerätes, somit nur intern im Telekommunikationsendgerät zwischen dessen Benutzerschicht (bzw. der weiteren zweiten Datenübertragungseinrichtung) und der Steuerungsschicht (bzw. der weiteren ersten Datenübertragungseinrichtung) verfügbar sind und/oder ausgetauscht werden.

Des Weiteren wird die Aufgabe erfindungsgemäß gelöst durch ein Telekommunikationsendgerätgemäß Anspruch 9.

Gemäß einer Ausführungsform der Erfindung ist es vorgesehen, dass das System und/oder das Telekommunikationsendgerät derart konfiguriert sind, dass die weitere zweite Datenübertragungseinrichtung lokal und innerhalb des Telekommunikationsendgeräts konfiguriert wird und/oder dass die Konfiguration des Telekommunikationsendgeräts direkt zwischen der ersten Datenübertragungseinrichtung und der weiteren ersten Datenübertragungseinrichtung unter Verwendung des Signalisierungsfunkkanals erfolgt und lediglich indirekt zwischen der zweiten Datenübertragungseinrichtung und der weiteren zweiten Datenübertragungseinrichtung erfolgt,
wobei insbesondere die Konfiguration der weiteren zweiten Datenübertragungseinrichtung innerhalb des Telekommunikationsendgeräts erfolgt, nachdem die Steuerungsinformationsdaten bereits zwischen der Basisstationseinrichtung und dem Telekommunikationsendgerät übertragen oder ausgetauscht sind.

Gemäß einer Ausführungsform der Erfindung ist es vorgesehen, dass die zwischen der ersten Datenübertragungseinrichtung und der weiteren ersten Datenübertragungseinrichtung ausgetauschten Steuerungsinformationsdaten sich auf die für die Konfiguration des Benutzerschicht-Funkübertragungskanal oder zur Konfiguration der den Benutzerschicht-Funkübertragungskanal nutzenden Kommunikation zur Bereitstellung des wenigstens einen Kommunikationsdienstes bezieht.

Gemäß einer Ausführungsform der Erfindung ist es vorgesehen, dass die zwischen der ersten Datenübertragungseinrichtung und der weiteren ersten Datenübertragungseinrichtung ausgetauschten Steuerungsinformationsdaten - im Rahmen des für die Konfiguration der Kommunikation oder des Kommunikationskanals zur Bereitstellung des wenigstens einen Kommunikationsdienstes Benötigten - unabhängig von den speziellen Gerätefähigkeiten des Telekommunikationsendgeräts ist.

Gemäß einer Ausführungsform der Erfindung ist es vorgesehen, dass die zwischen der ersten Datenübertragungseinrichtung und der weiteren ersten Datenübertragungseinrichtung ausgetauschten Steuerungsinformationsdaten eine generische Fähigkeitsinformation bezüglich der Gerätefähigkeiten des Telekommunikationsendgeräts umfasst.

Die Aufgabe wird ferner gelöst durch ein Computerprogramm mit Programmcodemitteln, mit deren Hilfe die Schritte eines Verfahrens nach einer Ausführungsform der Erfindung durchführbar sind, wenn das Computerprogramm auf einer programmierbaren Einrichtung, insbesondere als Teil des Systems, oder auf dem Telekommunikationsendgerät ausgeführt wird.

Die Aufgabe wird auch gelöst durch ein Computerprogrammprodukt mit einem computerlesbaren Medium und einem auf dem computerlesbaren Medium gespeicherten Computerprogramm mit Programmcodemitteln zur Konfiguration einer Kommunikation oder eines Kommunikationskanals eines Telekommunikationsendgeräts in einem Telekommunikationsnetz und/oder zur Konfiguration eines Telekommunikationsendgeräts zur Bereitstellung wenigstens eines Kommunikationsdienstes in einem Telekommunikationsnetz oder durch ein Telekommunikationsnetz, die dazu geeignet sind, dass die Schritte eines Verfahrens nach einer Ausführungsform der Erfindung durchführbar sind, wenn das Computerprogramm auf einer programmierbaren Einrichtung, insbesondere als Teil des Telekommunikationsnetzes oder auf dem Telekommunikationsendgerät ausgeführt wird.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- **Figur 1**: zeigt schematisch ein System gemäß einer Ausführungsform der Erfindung
- **Figur 2**: zeigt ein schematisches Kommunikationsdiagramm gemäß einer Ausführungsform der Erfindung.

### Ausführungsformen der Erfindung

Die vorliegende Erfindung wird mit Bezug auf besondere Ausführungen und mit Bezug zu den beiliegenden Zeichnungen beschrieben, wobei jedoch die Erfindung nicht auf diese Ausführungen und auf diese Zeichnungen beschränkt ist, sondern durch die Patentansprüche bestimmt ist. Die Zeichnungen sind nicht beschränkend zu. In den Zeichnungen können zu Darstellungszwecken bestimmte Elemente vergrößert bzw. übertrieben sowie nicht maßstabsgerecht dargestellt sein.

Falls nichts anderes spezifisch angegeben wird, umfasst die Verwendung eines unbestimmten oder bestimmten Artikels mit Bezug auf ein Wort in der Einzahl, beispielsweise "ein", "eine", "eines", "der", "die", "das", auch die Mehrzahl eines solchen Wortes. Die Bezeichnungen "erster", "erste", "erstes", "zweiter", "zweite", "zweites" und so fort in der Beschreibung und in den Ansprüchen werden zur Unterscheidung zwischen ähnlichen oder zu unterscheidenden gleichen Elementen verwendet und nicht zwingend zur Beschreibung einer zeitlichen oder sonstigen Abfolge. Die derart benutzten Begriffe sind grundsätzlich als unter entsprechenden Bedingungen austauschbar anzusehen.

In Figur 1 ist schematisch ein System gemäß einer Ausführungsform der Erfindung dargestellt. Insbesondere ist ein Telekommunikationsnetz 100 gezeigt. Das Telekommunikationsnetz umfasst dabei ein Zugangsnetz 110. Das Zugangsnetz weist dabei eine Basisstationseinrichtung 111 auf sowie insbesondere eine weitere Basisstationseinrichtung 112. Die Basisstationseinrichtung 111 bedient eine Funkzelle 10 und die weitere Basisstationseinrichtung 112 eine weitere Funkzelle 11. Innerhalb der Funkzelle 10, also im Empfangsbereich der Basisstationseinrichtung 111, befindet sich ein Telekommunikationsendgerät 20 und möglicherweise weitere Telekommunikationsendgeräte 21. Typischer Weise weist das Telekommunikationsnetz 100 zusätzlich ein Kernnetz 120 auf, wobei die Basisstationseinrichtungen 111, 112 typischerweise die Möglichkeit haben mit Entitäten des Kernnetzes (direkt oder über weitere Entitäten des Zugangsnetzes) kommunizieren zu können.

In Figur 2 ist ein schematisches Kommunikationsdiagramm gemäß einer Ausführungsform der Erfindung dargestellt. Hierbei sind insbesondere ein Telekommunikationsendgerät 20 und eine Basisstationseinrichtung 111 dargestellt. Das Telekommunikationsendgerät 20 weist dabei eine weitere erste Datenübertragungseinrichtung 22 und eine weitere zweite Datenübertragungseinrichtung 23 auf. Die Basisstationseinrichtung 111 weist eine erste Datenübertragungseinrichtung 122 und eine zweite Datenübertragungseinrichtung 123 auf. Die weitere erste Datenübertragungseinrichtung 22 und die erste Datenübertragungseinrichtung 122 sind dabei einer Steuerungsschicht 31 zugeordnet (bzw. gehören zu einer Steuerungsschicht 31). Die weitere zweite Datenübertragungseinrichtung 23 und die zweite Datenübertragungseinrichtung 123 sind einer Benutzerschicht 30 zugeordnet (bzw. gehören zu einer Benutzerschicht 30). Ein Signalisierungsfunkkanal 225 bietet eine Möglichkeit des Nachrichtenaustauschs (der Übermittlung von Nachrichten/Daten, insbesondere der Übermittlung von Steuerungsinformationsdaten 220) zwischen der weiteren ersten Datenübertragungseinrichtung 22 und der ersten Datenübertragungseinrichtung 122 (wobei die Möglichkeit besteht Nachrichten von der weiteren ersten Datenübertragungseinrichtung 22 zu der ersten Datenübertragungseinrichtung 122 zu senden, wobei ebenso die Möglichkeit besteht Nachrichten von der ersten Datenübertragungseinrichtung 122 zu der weiteren ersten Datenübertragungseinrichtung 22 zu senden). Die Kommunikation (der Datenaustausch) über den Signalisierungsfunkkanal 225 findet dabei bevorzugt innerhalb der Steuerungsschicht 20 statt. Ein Benutzerschicht-Funkübertragungskanals 235 bietet eine Möglichkeit des Nachrichtenaustauschs (der Übermittlung von Nachrichten/Daten, insbesondere der Übermittlung von Nutzerdaten 230) zwischen der weiteren zweiten Datenübertragungseinrichtung 23 und der zweiten Datenübertragungseinrichtung 123 (wobei die Möglichkeit besteht Nachrichten von der weiteren zweiten Datenübertragungseinrichtung 23 zu der zweiten Datenübertragungseinrichtung 123 zu senden, wobei ebenso die Möglichkeit besteht Nachrichten von der zweiten Datenübertragungseinrichtung 123 zu der weiteren zweiten Datenübertragungseinrichtung 23 zu senden). Des Weiteren existiert eine Kommunikationsmöglichkeit 221 zwischen der weiteren zweiten Datenübertragungseinrichtung 23 und der weiteren ersten Datenübertragungseinrichtung 22, wobei die Kommunikationsmöglichkeit 221 den Austausch von Daten oder Information zwischen der weiteren zweiten Datenübertragungseinrichtung 23 und der weiteren ersten Datenübertragungseinrichtung 22, wobei die Kommunikationsmöglichkeit 221 insbesondere das Vornehmen einer Konfigurierung, insbesondere einer Konfigurierung der weiteren zweiten Datenübertragungseinrichtung 23 durch die weitere erste Datenübertragungseinrichtung 22, ermöglicht. Des Weiteren existiert eine weitere Kommunikationsmöglichkeit 222 zwischen der zweiten Datenübertragungseinrichtung 123 und der ersten Datenübertragungseinrichtung 122, wobei die Kommunikationsmöglichkeit 222 den Austausch von Daten oder Information zwischen der zweiten Datenübertragungseinrichtung 123 und der ersten Datenübertragungseinrichtung 122 ermöglicht. Bevorzugt findet ein Austausch von Daten und ein Senden von Nachrichten mit dem erfindungsgemäßen Ziel (der Konfiguration einer Kommunikation oder eines Kommunikationskanals eines Telekommunikationsendgeräts 20 in einem Telekommunikationsnetz 100 und/oder der Konfiguration eines Telekommunikationsendgeräts 20 zur Bereitstellung wenigstens eines Kommunikationsdienstes in einem Telekommunikationsnetz 100 oder durch ein Telekommunikationsnetz 100) zwischen der Benutzerschicht 30 und der Steuerungsschicht 20 über die Kommunikationsmöglichkeit 221 (und potentiell auch über die weitere Kommunikationsmöglichkeit 222) statt und nicht direkt (also nicht ohne die Beteiligung der weiteren ersten Datenübertragungseinrichtung 22 und/oder der zweiten Datenübertragungseinrichtung 123) zwischen der ersten Datenübertragungseinrichtung 122 und der weiteren zweiten Datenübertragungseinrichtung 23. In einem ersten Schritt findet - zur Konfiguration des Benutzerschicht-Funkübertragungskanal 235 oder zur Konfiguration einer den Benutzerschicht-Funkübertragungskanal 235 nutzenden Kommunikation und/oder zur Konfiguration des Telekommunikationsendgeräts 20 - zwischen der ersten Datenübertragungseinrichtung 122 und der weiteren ersten Datenübertragungseinrichtung 22 ein Austausch der Steuerungsinformationsdaten 220 statt. So werden beispielsweise von der ersten Datenübertragungseinrichtung 122 an die weitere erste Datenübertragungseinrichtung Steuerungsinformationsdaten 220, die sich auf die für die Konfiguration des Benutzerschicht-Funkübertragungskanal 235 oder zur Konfiguration der den Benutzerschicht-Funkübertragungskanal 235 nutzenden Kommunikation zur Bereitstellung des wenigstens einen Kommunikationsdienstes beziehen (bzw. die Konfiguration anfragen/auslösen), gesendet. Dabei sendet die erste Datenübertragungseinrichtung 122 bevorzugt keine Daten zu den speziellen Gerätefähigkeiten des Telekommunikationsendgerätes 20 an die weitere erste Datenübertragungseinrichtung 22, bevorzugt weisen die von der ersten Datenübertragungseinrichtung 122 in Richtung der weiteren ersten Datenübertragungseinrichtung 22 gesendeten Steuerungsinformationsdaten 220 also keine Informationen zu den speziellen Gerätefähigkeiten des Telekommunikationsendgerätes 20 auf. Ebenso weisen die potentiell von der weiteren ersten Datenübertragungseinrichtung 22 an die erste Datenübertragungseinrichtung 122 gesendeten Steuerungsinformationsdaten 220 keine Daten auf, die sich auf die speziellen Gerätefähigkeiten des Telekommunikationsendgeräts 20 beziehen. Gemäß einer Ausführungsform der Erfindung wird dann in einem auf den ersten Schritt folgenden zweiten Schritt die weitere zweite Datenübertragungseinrichtung 23 des Telekommunikationsendgeräts 20 in Abhängigkeit der Steuerungsinformationsdaten 220 durch die weitere erste Datenübertragungseinrichtung 22 konfiguriert (wodurch eine Konfiguration des Benutzerschicht-Funkübertragungskanal 235 oder eine Konfiguration einer den Benutzerschicht-Funkübertragungskanal 235 nutzenden Kommunikation und/oder zur Konfiguration des Telekommunikationsendgeräts 20 stattfindet), wobei die dafür nötigen Informationen zu den speziellen Gerätefähigkeiten des Telekommunikationsendgerätes der weiteren zweiten Datenübertragungseinrichtung 23 zur Verfügung stehen (beispielsweise durch die Kommunikationsmöglichkeit 221 oder durch eine andere Entität des Telekommunikationsendgerätes 20). Optional wird nach erfolgter Konfiguration der für das Telekommunikationsnetz relevante lokale Status (beispielsweise, der sich auf das Telekommunikationsgerät 20 beziehende Status) bezüglich des Benutzerschicht-Funkübertragungskanal 235 oder der den Benutzerschicht-Funkübertragungskanal 235 nutzenden Kommunikation und/oder des Telekommunikationsendgeräts 20 mittels der Kommunikationsmöglichkeit 221 der weiteren ersten Datenübertragungseinrichtung 22 bekannt gemacht oder ist der weiteren ersten Datenübertragungseinrichtung 22 bekannt, da sie ein Teil des Telekommunikationsendgeräts 20 ist. Bevorzugt wird im Folgenden über den Signalisierungsfunkkanal 225 innerhalb der Steuerschicht 20 der relevante lokale Status (bzw. eine Nachricht mit einer Information zu diesem relevanten lokalen Status) von der weiteren ersten Datenübertragungseinrichtung 22 an die erste Datenübertragungseinrichtung 122 (und damit an das Telekommunikationsnetz 100) gesendet und der relevante lokale Status dadurch dem Telekommunikationsnetz 100 bekannt gemacht.

Für ein Beispiel der Verwendung einer Sprachkommunikation unter Verwendung einer menschlichen Sprache gilt somit, dass erfindungsgemäß als Steuerungsinformationsdaten 220 (über den Signalisierungsfunkkanal 225) zwischen dem Telekommunikationsnetz 100 und dem Telekommunikationsendgerät 20 etwa die Benutzung von "menschlicher Sprache" vereinbart wird. Wiederum muss das Telekommunikationsnetz nicht (bzw. soll nicht) wissen, welche Gerätefähigkeiten das Telekommunikationsendgerät 20 (spezifisch und konkret) hat (etwa im Beispiel, welche konkrete Sprachfähigkeit (etwa aus der Menge {Deutsch; English; Französisch; Kroatisch; Chinesisch}) vorhanden ist), sondern nur, dass das Telekommunikationsendgerät 20 eine {menschliche Sprache} beherrscht. Diese Information (d.h. "benutze {menschliche Sprache}") wird beispielsweise innerhalb des Telekommunikationsendgeräts 20 (insbesondere durch die weitere erste Datenübertragungseinrichtung 22) einer (in Figur 2 nicht dargstellten) Entscheidungseinheit (bzw. einer Hypervisor-Einheit oder Hypervisor-Komponente) übergeben, so dass es in einer solchen Situation erfindungsgemäß möglich ist (unter Nutzung der ersten Datenübertragungseinrichtung 122 der Basisstationseinrichtung 111 und der weiteren ersten Datenübertragungseinrichtung 22 des Telekommunikationsendgeräts 20) dem Telekommunikationsendgerät (als Teil einer generischen Fähigkeitsinformation bzw. als Teil einer generischen Konfigurationsanforderung) zu signalisieren, dass mit (bzw. in) einer menschlichen Sprache kommunizieren werden soll. Die Steuerungsschicht des Telekommunikationsendgeräts 20, d.h. konkret etwa die User Equipment Control Plane entity (bzw. die Entscheidungseinheit oder die Hypervisor-Einheit), ist nun in der Lage, mittels weiterer interner Kommunikation innerhalb des Telekommunikationsendgeräts 20, dass etwa Kroatisch verwendet werden soll. Die Entscheidung hierüber (die insbesondere durch die Entscheidungseinheit bzw. Hypervisor-Einheit getroffen wird) kann insbesondere davon abhängig sein, welche Prozessing-Ressourcen im Telekommunikationsendgerät 20 zur Verfügung stehen. Auf dem Benutzerschicht-Funkübertragungskanal 235 wird dann - etwa als Teil der Nutzerdaten 230 - der Informationsinhalt "dobar dan" ("guten Tag") übertragen und durch die zweite Datenübertragungseinrichtung 123 erkannt, dass es sich hierbei um eine Äußerung in kroatischer Sprache handelt.

## Patentansprüche

1. Verfahren zur Konfiguration einer Kommunikation oder eines Kommunikationskanals eines Telekommunikationsendgeräts (20) in einem Telekommunikationsnetz (100) [telecommunications network] und/oder zur Konfiguration eines Telekommunikationsendgeräts (20) zur Bereitstellung wenigstens eines Kommunikationsdienstes in einem Telekommunikationsnetz (100) oder durch ein Telekommunikationsnetz (100), wobei das Telekommunikationsnetz (100) ein Zugangsnetz (110) mit wenigstens einer Basisstationseinrichtung (111) [base station entity] aufweist, wobei die wenigstens eine Basisstationseinrichtung (111)
-- eine erste Datenübertragungseinrichtung (122) als Teil einer Steuerungsschicht (31) der Basisstationseinrichtung (111) und
-- eine zweite Datenübertragungseinrichtung (123) als Teil einer Benutzerschicht (30) [user plane] der Basisstationseinrichtung (111)
aufweist, wobei das Telekommunikationsendgerät (20)
-- eine weitere erste Datenübertragungseinrichtung (22) als Teil einer Steuerungsschicht (31) des Telekommunikationsendgeräts (20) und
-- eine weitere zweite Datenübertragungseinrichtung (23) als Teil einer Benutzerschicht (30) des Telekommunikationsendgeräts (20) aufweist, wobei ein Signalisierungsfunkkanal (225) zur Übertragung von als Teil von oder innerhalb der Steuerungsschicht (31) übertragenen Steuerungsinformationsdaten (220) vorgesehen ist, wobei ein Benutzerschicht-Funkübertragungskanal [user plane radio transmission channel] (235) zur Übertragung von als Teil von oder innerhalb der Benutzerschicht (30) übertragenen Nutzerdaten (230) vorgesehen ist,
wobei das Verfahren wenigstens die folgenden Schritte aufweist,
-- in einem ersten Schritt findet - zur Konfiguration des Benutzerschicht-Funkübertragungskanal (235) oder zur Konfiguration einer den Benutzerschicht-Funkübertragungskanal (235) nutzenden Kommunikation und/oder zur Konfiguration des Telekommunikationsendgeräts (20) - zwischen der ersten Datenübertragungseinrichtung (122) und der weiteren ersten Datenübertragungseinrichtung (22) ein Austausch der Steuerungsinformationsdaten [control information data] (220) statt, wobei sich die ausgetauschten Steuerungsinformationsdaten (220) auf die Konfiguration des Benutzerschicht-Funkübertragungskanals (235) oder die Konfiguration der den Benutzerschicht-Funkübertragungskanal (235) nutzenden Kommunikation beziehen, wobei die weitere erste Datenübertragungseinrichtung (22) als Teil der Steuerungsschicht des Telekommunikationsendgerätes während oder zu Beginn des ersten Schritts einen generischen Fähigkeits-Report als Teil der Steuerungsinformationsdaten (220) an die erste Datenübertragungseinrichtung (122) sendet, wobei spezielle Benutzerschicht-Fähigkeiten des Telekommunikationsendgeräts (20) gegenüber der ersten Datenübertragungseinrichtung verborgen bleiben und nicht in dem generischen Fähigkeits-Report enthalten sind,
-- in einem auf den ersten Schritt folgenden zweiten Schritt wird die weitere zweite Datenübertragungseinrichtung (23) des Telekommunikationsendgeräts (20) in Abhängigkeit der Steuerungsinformationsdaten (220) und in Abhängigkeit von Informationen bezüglich der speziellen Benutzerschicht-Fähigkeiten des Telekommunikationsendgeräts (20) durch die weitere erste Datenübertragungseinrichtung (22) konfiguriert,
wobei die weitere zweite Datenübertragungseinrichtung (23) lokal und innerhalb des Telekommunikationsendgeräts (20) konfiguriert wird und/oder dass die Konfiguration des Telekommunikationsendgeräts (20) direkt zwischen der ersten Datenübertragungseinrichtung (122) und der weiteren ersten Datenübertragungseinrichtung (22) unter Verwendung des Signalisierungsfunkkanals (225) erfolgt und lediglich indirekt zwischen der zweiten Datenübertragungseinrichtung (123) und der weiteren zweiten Datenübertragungseinrichtung (23) erfolgt.

2. Verfahren nach Anspruch 1, **dadurch gekennzeichnet, dass** die Konfiguration der weiteren zweiten Datenübertragungseinrichtung (23) innerhalb des Telekommunikationsendgeräts (20) erfolgt, nachdem die Steuerungsinformationsdaten (220) bereits zwischen der Basisstationseinrichtung (111) und dem Telekommunikationsendgerät (20) übertragen oder ausgetauscht sind.

3. Verfahren nach einem der vorhergehenden Ansprüche, **dadurch gekennzeichnet, dass** die im ersten Schritt zwischen der ersten Datenübertragungseinrichtung (122) der weiteren ersten Datenübertragungseinrichtung (22) ausgetauschten Steuerungsinformationsdaten (220) eine generische Fähigkeitsinformation [generic capability information] bezüglich der Gerätefähigkeiten des Telekommunikationsendgeräts (20) umfasst.

4. Verfahren nach einem der vorhergehenden Ansprüche, **dadurch gekennzeichnet, dass** die im ersten Schritt zwischen der ersten Datenübertragungseinrichtung (122) und der weiteren ersten Datenübertragungseinrichtung (22) ausgetauschten Steuerungsinformationsdaten (220) eine generische Konfigurationsanforderung [generic configuration request] bezüglich der Gerätefähigkeiten des Telekommunikationsendgeräts (20) und/oder bezüglich des Kommunikationskanals zur Bereitstellung des wenigstens einen Kommunikationsdienstes umfasst.

5. Verfahren nach einem der vorhergehenden Ansprüche, **dadurch gekennzeichnet,**
**dass** die zweite Datenübertragungseinrichtung(123) eine erste Funkverbindungssteuerungseinrichtung und eine erste Mediumzugangssteuerungseinrichtung und eine erste Einrichtung zur Bereitstellung und/oder Implementierung des physikalischen Funkübertragungskanals und eine erste physikalische Schicht aufweist und
**dass** die weitere zweite Datenübertragungseinrichtung (23) eine zweite Funkverbindungssteuerungseinrichtung und eine zweite Mediumzugangssteuerungseinrichtung und eine zweite Einrichtung zur Bereitstellung und Implementierung des physikalischen Funkübertragungskanals und eine zweite physikalische Schicht aufweist.

6. System zur Konfiguration einer Kommunikation oder eines Kommunikationskanals eines Telekommunikationsendgeräts (20) in einem Telekommunikationsnetz (100) und/oder zur Konfiguration eines Telekommunikationsendgeräts (20) zur Bereitstellung wenigstens eines Kommunikationsdienstes in einem Telekommunikationsnetz (100) oder durch ein Telekommunikationsnetz (100), wobei das Telekommunikationsnetz (100) ein Zugangsnetz (110) mit wenigstens einer Basisstationseinrichtung (111) aufweist, wobei die wenigstens eine Basisstationseinrichtung (111)
-- eine erste Datenübertragungseinrichtung (122) als Teil einer Steuerungsschicht (31) der Basisstationseinrichtung (111) und
-- eine zweite Datenübertragungseinrichtung (123) als Teil einer Benutzerschicht (30) [user plane] der Basisstationseinrichtung (111)
aufweist,
wobei das Telekommunikationsendgerät (20)
-- eine weitere erste Datenübertragungseinrichtung (22) als Teil einer Steuerungsschicht (31) des Telekommunikationsendgeräts (20) und
-- eine weitere zweite Datenübertragungseinrichtung (23) als Teil einer Benutzerschicht (30) des Telekommunikationsendgeräts (20) aufweist,
wobei ein Signalisierungsfunkkanal (225) zur Übertragung von als Teil von oder innerhalb der Steuerungsschicht (31) übertragenen Steuerungsinformationsdaten (220) vorgesehen ist, wobei ein Benutzerschicht-Funkübertragungskanal (235) zur Übertragung von als Teil von oder innerhalb der Benutzerschicht (30) übertragenen Nutzerdaten (230) vorgesehen ist,
wobei das System derart konfiguriert ist, dass,
-- zwischen der ersten Datenübertragungseinrichtung (122) und der weiteren ersten Datenübertragungseinrichtung (22) ein Austausch von Steuerungsinformationsdaten (220) zur Konfiguration des Benutzerschicht-Funkübertragungskanals (235) oder zur Konfiguration einer den Benutzerschicht-Funkübertragungskanal (235) nutzenden Kommunikation und/oder zur Konfiguration des Telekommunikationsendgeräts (20) stattfindet, wobei sich die ausgetauschten Steuerungsinformationsdaten (220) auf die Konfiguration des Benutzerschicht-Funkübertragungskanals (235) oder die Konfiguration der den Benutzerschicht-Funkübertragungskanal (235) nutzenden Kommunikation beziehen, wobei das System derart konfiguriert ist, dass die weitere erste Datenübertragungseinrichtung (22) als Teil der Steuerungsschicht des Telekommunikationsendgerätes einen generischen Fähigkeits-Report als Teil der Steuerungsinformationsdaten (220) an die erste Datenübertragungseinrichtung (122) sendet, wobei spezielle Benutzerschicht-Fähigkeiten des Telekommunikationsendgeräts (20) gegenüber der ersten Datenübertragungseinrichtung verborgen bleiben und nicht in dem generischen Fähigkeits-Report enthalten sind,
und dass
-- die weitere zweite Datenübertragungseinrichtung (23) des Telekommunikationsendgeräts (20) in Abhängigkeit der Steuerungsinformationsdaten (220) und in Abhängigkeit von Informationen bezüglich der speziellen Benutzerschicht-Fähigkeiten des Telekommunikationsendgeräts (20) durch die weitere erste Datenübertragungseinrichtung (22) konfiguriert wird,
wobei das System derart konfiguriert ist, dass die weitere zweite Datenübertragungseinrichtung (23) lokal und innerhalb des Telekommunikationsendgeräts (20) konfiguriert wird und/oder dass die Konfiguration des Telekommunikationsendgeräts (20) direkt zwischen der ersten Datenübertragungseinrichtung (122) und der weiteren ersten Datenübertragungseinrichtung (22) unter Verwendung des Signalisierungsfunkkanals (225) erfolgt und lediglich indirekt zwischen der zweiten Datenübertragungseinrichtung (123) und der weiteren zweiten Datenübertragungseinrichtung (23) erfolgt.

7. Telekommunikationsendgerät (20) zur Konfiguration einer Kommunikation oder eines Kommunikationskanals des Telekommunikationsendgeräts (20) in einem Telekommunikationsnetz (100) und/oder zur Konfiguration des Telekommunikationsendgeräts (20) zur Bereitstellung wenigstens eines Kommunikationsdienstes in einem Telekommunikationsnetz (100) oder durch ein Telekommunikationsnetz (100), wobei das Telekommunikationsendgerät (20) zur Kommunikation mit dem Telekommunikationsnetz (100) über ein wenigstens eine Basisstationseinrichtung (111) aufweisendes Zugangsnetz (110) vorgesehen ist, vorgesehen ist,
wobei das Telekommunikationsendgerät (20)
-- eine weitere erste Datenübertragungseinrichtung (22) als Teil einer Steuerungsschicht (31) des Telekommunikationsendgeräts (20) und
-- eine weitere zweite Datenübertragungseinrichtung (23) als Teil einer Benutzerschicht (30) des Telekommunikationsendgeräts (20) aufweist,
wobei ein Signalisierungsfunkkanal (225) zur Übertragung von als Teil von oder innerhalb der Steuerungsschicht (31) übertragenen Steuerungsinformationsdaten (220) vorgesehen ist, wobei ein Benutzerschicht-Funkübertragungskanal (235) zur Übertragung von als Teil von oder innerhalb der Benutzerschicht (30) übertragenen Nutzerdaten (230) vorgesehen ist,
wobei das Telekommunikationsendgerät (20) derart konfiguriert ist, dass,
-- zwischen der weiteren ersten Datenübertragungseinrichtung (22) und einer ersten Datenübertragungseinrichtung (122) der wenigstens einen Basisstationseinrichtung (111) ein Austausch von Steuerungsinformationsdaten (220) zur Konfiguration des Benutzerschicht-Funkübertragungskanals (235) oder zur Konfiguration einer den Benutzerschicht-Funkübertragungskanal (235) nutzenden Kommunikation und/oder zur Konfiguration des Telekommunikationsendgeräts (20) stattfindet, wobei sich die ausgetauschten Steuerungsinformationsdaten (220) auf die Konfiguration des Benutzerschicht-Funkübertragungskanals (235) oder die Konfiguration der den Benutzerschicht-Funkübertragungskanal (235) nutzenden Kommunikation beziehen, wobei das Telekommunikationsendgerät (20) derart konfiguriert ist, dass die weitere erste Datenübertragungseinrichtung (22) als Teil der Steuerungsschicht des Telekommunikationsendgerätes einen generischen Fähigkeits-Report als Teil der Steuerungsinformationsdaten an die erste Datenübertragungseinrichtung (122) sendet, wobei spezielle Benutzerschicht-Fähigkeiten des Telekommunikationsendgeräts (20) gegenüber der ersten Datenübertragungseinrichtung verborgen bleiben und nicht in dem generischen Fähigkeits-Report enthalten sind,
und dass
-- die weitere zweite Datenübertragungseinrichtung (23) des Telekommunikationsendgeräts (20) in Abhängigkeit der Steuerungsinformationsdaten (220) und in Abhängigkeit von Informationen bezüglich der speziellen Benutzerschicht-Fähigkeiten des Telekommunikationsendgeräts (20) durch die weitere erste Datenübertragungseinrichtung (22) konfiguriert wird,
wobei das Telekommunikationsendgerät (20) derart konfiguriert ist, dass die weitere zweite Datenübertragungseinrichtung (23) lokal und innerhalb des Telekommunikationsendgeräts (20) konfiguriert wird und/oder dass die Konfiguration des Telekommunikationsendgeräts (20) direkt zwischen der ersten Datenübertragungseinrichtung (122) und der weiteren ersten Datenübertragungseinrichtung (22) unter Verwendung des Signalisierungsfunkkanals (225) erfolgt und lediglich indirekt zwischen der zweiten Datenübertragungseinrichtung (123) und der weiteren zweiten Datenübertragungseinrichtung (23) erfolgt.

8. System nach Anspruch 6 oder Telekommunikationsendgerät (20) nach Anspruch 7, **dadurch gekennzeichnet, dass** die Konfiguration der weiteren zweiten Datenübertragungseinrichtung (23) innerhalb des Telekommunikationsendgeräts (20) erfolgt, nachdem die Steuerungsinformationsdaten (220) bereits zwischen der Basisstationseinrichtung (111) und dem Telekommunikationsendgerät (20) übertragen oder ausgetauscht sind.

9. Computerprogramm mit Programmcodemitteln, mit deren Hilfe die Schritte eines Verfahrens nach einem der Ansprüche 1 bis 5 durchführbar sind, wenn das Computerprogramm auf einer programmierbaren Einrichtung, insbesondere als Teil des Systems, oder auf dem Telekommunikationsendgerät (20) ausgeführt wird.

10. Computerprogrammprodukt mit einem computerlesbaren Medium und einem auf dem computerlesbaren Medium gespeicherten Computerprogramm mit Programmcodemitteln zur Konfiguration einer Kommunikation oder eines Kommunikationskanals eines Telekommunikationsendgeräts (20) in einem Telekommunikationsnetz (100) und/oder zur Konfiguration eines Telekommunikationsendgeräts (20) zur Bereitstellung wenigstens eines Kommunikationsdienstes in einem Telekommunikationsnetz (100) oder durch ein Telekommunikationsnetz (100), die dazu geeignet sind, dass die Schritte eines Verfahrens nach einem der Ansprüche 1 bis 5 durchführbar sind, wenn das Computerprogramm auf einer programmierbaren Einrichtung, insbesondere als Teil des Telekommunikationsnetzes (100) oder auf dem Telekommunikationsendgerät (20) ausgeführt wird.

## Claims

1. Method for configuring a communication channel of a telecommunication terminal device (20) in a telecommunication network (100) and/or for configuring a telecommunication terminal device (20) for providing at least one communication service in a telecommunication network (100) or through a telecommunication network (100), wherein the telecommunication network (100) comprises an access network (110) having at least one base station entity (111), wherein the at least one base station entity (111) comprises
- a first data transmission device (122) as part of a control plane (31) of the base station entity (111), and
- a second data transmission device (123) as part of a user plane (30) of the base station entity (111),
wherein the telecommunication terminal device (20) comprises
- a further first data transmission device (22) as part of a control plane (31) of the telecommunication terminal device (20), and
- a further second data transmission device (23) as part of a user plane (30) of the telecommunication terminal device (20),
wherein a signalling radio channel (225) is provided for transmitting control information data (220) transmitted as part of or within the control plane (31), wherein a user plane radio transmission channel (235) is provided for transmitting user data (230) transmitted as part of or within the user plane (30),
wherein the method comprises at least the following steps:
- in a first step - for configuring the user plane radio transmission channel (235) or for configuring a communication using the user plane radio transmission channel (235) and/or for configuring the telecommunication terminal device (20) - an exchange of control information data (220) takes place between the first data transmission device (122) and the further first data transmission device (22), wherein the exchanged control information data (220) relate to the configuration of the user plane radio transmission channel (235) or the configuration of the communication using the user plane radio transmission channel (235), wherein the further first data transmission device (22), as part of the control plane of the telecommunication terminal device, transmits a generic capability report as part of the control information data (220) to the first data transmission device (122) during or at the beginning of the first step, wherein specific user plane capabilities of the telecommunication terminal device (20) remain concealed from the first data transmission device and are not included in the generic capability report,
- in a second step following the first step, the further second data transmission device (23) of the telecommunication terminal device (20) is configured by the further first data transmission device (22) depending on the control information data (220) and depending on information regarding the specific user plane capabilities of the telecommunication terminal device (20),
wherein the further second data transmission device (23) is configured locally and within the telecommunication terminal device (20) and/or wherein the configuration of the telecommunication terminal device (20) takes place directly between the first data transmission device (122) and the further first data transmission device (22) using the signalling radio channel (225), and takes place only indirectly between the second data transmission device (123) and the further second data transmission device (23).

2. Method according to Claim 1, **characterised in that** the configuration of the further second data transmission device (23) takes place within the telecommunication terminal device (20) after the control information data (220) have already been transmitted or exchanged between the base station entity (111) and the telecommunication terminal device (20).

3. Method according to any one of the preceding claims, **characterised in that** the control information data (220) exchanged in the first step between the first data transmission device (122) and the further first data transmission device (22) comprise generic capability information relating to the device capabilities of the telecommunication terminal device (20).

4. Method according to any one of the preceding claims, **characterised in that** the control information data (220) exchanged in the first step between the first data transmission device (122) and the further first data transmission device (22) comprise a generic configuration request relating to the device capabilities of the telecommunication terminal device (20) and/or relating to the communication channel for providing the at least one communication service.

5. Method according to any one of the preceding claims, **characterised in that** the second data transmission device (123) comprises a first radio link control entity and a first medium access control entity and a first device for providing and/or implementing the physical radio transmission channel and a first physical layer, and
that the further second data transmission device (23) comprises a second radio link control entity and a second medium access control entity and a second device for providing and implementing the physical radio transmission channel and a second physical layer.

6. System for configuring a communication channel of a telecommunication terminal device (20) in a telecommunication network (100) and/or for configuring a telecommunication terminal device (20) for providing at least one communication service in a telecommunication network (100) or through a telecommunication network (100),
wherein the telecommunication network (100) comprises an access network (110) having at least one base station entity (111), wherein the at least one base station entity (111) comprises
- a first data transmission device (122) as part of a control plane (31) of the base station entity (111), and
- a second data transmission device (123) as part of a user plane (30) of the base station entity (111),
wherein the telecommunication terminal device (20) comprises
- a further first data transmission device (22) as part of a control plane (31) of the telecommunication terminal device (20), and
- a further second data transmission device (23) as part of a user plane (30) of the telecommunication terminal device (20),
wherein a signalling radio channel (225) is provided for transmitting control information data (220) transmitted as part of or within the control plane (31), wherein a user plane radio transmission channel (235) is provided for transmitting user data (230) transmitted as part of or within the user plane (30),
wherein the system is configured such that
- an exchange of control information data (220) for configuring the user plane radio transmission channel (235) or for configuring a communication using the user plane radio transmission channel (235) and/or for configuring the telecommunication terminal device (20) takes place between the first data transmission device (122) and the further first data transmission device (22), wherein the exchanged control information data (220) relate to the configuration of the user plane radio transmission channel (235) or the configuration of the communication using the user plane radio transmission channel (235), wherein the system is configured such that the further first data transmission device (22), as part of the control plane of the telecommunication terminal device, transmits a generic capability report as part of the control information data (220) to the first data transmission device (122), wherein specific user plane capabilities of the telecommunication terminal device (20) remain concealed from the first data transmission device and are not included in the generic capability report,
and that
- the further second data transmission device (23) of the telecommunication terminal device (20) is configured by the further first data transmission device (22) depending on the control information data (220) and depending on information regarding the specific user plane capabilities of the telecommunication terminal device (20),
wherein the system is configured such that the further second data transmission device (23) is configured locally and within the telecommunication terminal device (20) and/or wherein the configuration of the telecommunication terminal device (20) takes place directly between the first data transmission device (122) and the further first data transmission device (22) using the signalling radio channel (225), and takes place only indirectly between the second data transmission device (123) and the further second data transmission device (23).

7. Telecommunication terminal device (20) for configuring a communication channel of the telecommunication terminal device (20) in a telecommunication network (100) and/or for configuring the telecommunication terminal device (20) for providing at least one communication service in a telecommunication network (100) or through a telecommunication network (100), wherein the telecommunication terminal device (20) is provided for communicating with the telecommunication network (100) via an access network (110) comprising at least one base station entity (111),
wherein the telecommunication terminal device (20) comprises
- a further first data transmission device (22) as part of a control plane (31) of the telecommunication terminal device (20), and
- a further second data transmission device (23) as part of a user plane (30) of the telecommunication terminal device (20),
wherein a signalling radio channel (225) is provided for transmitting control information data (220) transmitted as part of or within the control plane (31), wherein a user plane radio transmission channel (235) is provided for transmitting user data (230) transmitted as part of or within the user plane (30),
wherein the telecommunication terminal device (20) is configured such that
- an exchange of control information data (220) for configuring the user plane radio transmission channel (235) or for configuring a communication using the user plane radio transmission channel (235) and/or for configuring the telecommunication terminal device (20) takes place between the further first data transmission device (22) and a first data transmission device (122) of the at least one base station entity (111), wherein the exchanged control information data (220) relate to the configuration of the user plane radio transmission channel (235) or the configuration of the communication using the user plane radio transmission channel (235), wherein the telecommunication terminal device (20) is configured such that the further first data transmission device (22), as part of the control plane of the telecommunication terminal device, transmits a generic capability report as part of the control information data to the first data transmission device (122), wherein specific user plane capabilities of the telecommunication terminal device (20) remain concealed from the first data transmission device and are not included in the generic capability report,
and that
- the further second data transmission device (23) of the telecommunication terminal device (20) is configured by the further first data transmission device (22) depending on the control information data (220) and depending on information regarding the specific user plane capabilities of the telecommunication terminal device (20),
wherein the telecommunication terminal device (20) is configured such that the further second data transmission device (23) is configured locally and within the telecommunication terminal device (20) and/or wherein the configuration of the telecommunication terminal device (20) takes place directly between the first data transmission device (122) and the further first data transmission device (22) using the signalling radio channel (225), and takes place only indirectly between the second data transmission device (123) and the further second data transmission device (23).

8. System according to Claim 6 or telecommunication terminal device (20) according to Claim 7, **characterised in that** the configuration of the further second data transmission device (23) takes place within the telecommunication terminal device (20) after the control information data (220) have already been transmitted or exchanged between the base station entity (111) and the telecommunication terminal device (20).

9. Computer program comprising program code means by means of which the steps of a method according to any one of Claims 1 to 5 can be carried out when the computer program is executed on a programmable device, in particular as part of the system, or on the telecommunication terminal device (20).

10. Computer program product comprising a computer-readable medium and a computer program stored on the computer-readable medium and comprising program code means for configuring a communication channel of a telecommunication terminal device (20) in a telecommunication network (100) and/or for configuring a telecommunication terminal device (20) for providing at least one communication service in a telecommunication network (100) or through a telecommunication network (100), which are suitable for the steps of a method according to any one of Claims 1 to 5 to be carried out when the computer program is executed on a programmable device, in particular as part of the telecommunication network (100) or on the telecommunication terminal device (20).

## Revendications

1. Procédé de configuration d'une communication ou d'un canal de communication d'un terminal de télécommunication (20) dans un réseau de télécommunication (100) et/ou de configuration d'un terminal de télécommunication (20) pour la fourniture d'au moins un service de communication dans un réseau de télécommunication (100) ou par l'intermédiaire d'un réseau de télécommunication (100), ledit réseau de télécommunication (100) comprenant un réseau d'accès (110) comportant au moins une entité de station de base (111), ladite au moins une entité de station de base (111) comprenant
- un premier dispositif de transmission de données (122) faisant partie d'un plan de commande (31) de l'entité de station de base (111), et
- un deuxième dispositif de transmission de données (123) faisant partie d'un plan utilisateur (30) de l'entité de station de base (111),
ledit terminal de télécommunication (20) comprenant
- un autre premier dispositif de transmission de données (22) faisant partie d'un plan de commande (31) du terminal de télécommunication (20), et
- un autre deuxième dispositif de transmission de données (23) faisant partie d'un plan utilisateur (30) du terminal de télécommunication (20),
un canal radio de signalisation (225) étant prévu pour transmettre des données d'information de commande (220) transmises en tant que partie du plan de commande (31) ou à l'intérieur de celui-ci, un canal de transmission radio du plan utilisateur (235) étant prévu pour transmettre des données utilisateur (230) transmises en tant que partie du plan utilisateur (30) ou à l'intérieur de celui-ci,
ledit procédé comprenant au moins les étapes suivantes :
- à une première étape - pour configurer le canal de transmission radio du plan utilisateur (235) ou pour configurer une communication utilisant le canal de transmission radio du plan utilisateur (235) et/ou pour configurer le terminal de télécommunication (20) - un échange des données d'information de commande (220) a lieu entre le premier dispositif de transmission de données (122) et l'autre premier dispositif de transmission de données (22), les données d'information de commande (220) échangées portant sur la configuration du canal de transmission radio du plan utilisateur (235) ou sur la configuration de la communication utilisant le canal de transmission radio du plan utilisateur (235), l'autre premier dispositif de transmission de données (22), en tant que partie du plan de commande du terminal de télécommunication, envoyant un rapport de capacités générique en tant que partie des données d'information de commande (220) au premier dispositif de transmission de données (122) pendant ou au début de la première étape, des capacités du plan utilisateur spécifiques du terminal de télécommunication (20) restant cachées au premier dispositif de transmission de données et n'étant pas incluses dans le rapport de capacités générique,
- à une deuxième étape faisant suite à la première étape, l'autre deuxième dispositif de transmission de données (23) du terminal de télécommunication (20) est configuré par l'autre premier dispositif de transmission de données (22) en fonction des données d'information de commande (220) et en fonction d'informations relatives aux capacités du plan utilisateur spécifiques du terminal de télécommunication (20), l'autre deuxième dispositif de transmission de données (23) étant configuré localement et à l'intérieur du terminal de télécommunication (20) et/ou la configuration du terminal de télécommunication (20) s'effectuant directement entre le premier dispositif de transmission de données (122) et l'autre premier dispositif de transmission de données (22) au moyen du canal radio de signalisation (225), et s'effectuant seulement indirectement entre le deuxième dispositif de transmission de données (123) et l'autre deuxième dispositif de transmission de données (23).

2. Procédé selon la revendication 1, **caractérisé en ce que** la configuration de l'autre deuxième dispositif de transmission de données (23) s'effectue à l'intérieur du terminal de télécommunication (20) après que les données d'information de commande (220) ont déjà été transmises ou échangées entre l'entité de station de base (111) et le terminal de télécommunication (20).

3. Procédé selon l'une des revendications précédentes, **caractérisé en ce que** les données d'information de commande (220) échangées à la première étape entre le premier dispositif de transmission de données (122) et l'autre premier dispositif de transmission de données (22) comprennent une information de capacité générique relative aux capacités du dispositif du terminal de télécommunication (20).

4. Procédé selon l'une des revendications précédentes, **caractérisé en ce que** les données d'information de commande (220) échangées à la première étape entre le premier dispositif de transmission de données (122) et l'autre premier dispositif de transmission de données (22) comprennent une demande de configuration générique relative aux capacités du dispositif du terminal de télécommunication (20) et/ou relative au canal de communication pour la fourniture dudit au moins un service de communication.

5. Procédé selon l'une des revendications précédentes, **caractérisé en ce que** le deuxième dispositif de transmission de données (123) comprend une première entité de contrôle de liaison radio et une première entité de contrôle d'accès au médium et un premier dispositif pour la fourniture et/ou la mise en œuvre du canal de transmission radio physique et une première couche physique, et
**en ce que** l'autre deuxième dispositif de transmission de données (23) comprend une deuxième entité de contrôle de liaison radio et une deuxième entité de contrôle d'accès au médium et un deuxième dispositif pour la fourniture et la mise en œuvre du canal de transmission radio physique et une deuxième couche physique.

6. Système de configuration d'une communication ou d'un canal de communication d'un terminal de télécommunication (20) dans un réseau de télécommunication (100) et/ou de configuration d'un terminal de télécommunication (20) pour la fourniture d'au moins un service de communication dans un réseau de télécommunication (100) ou par l'intermédiaire d'un réseau de télécommunication (100), ledit réseau de télécommunication (100) comprenant un réseau d'accès (110) comportant au moins une entité de station de base (111), ladite au moins une entité de station de base (111) comprenant
- un premier dispositif de transmission de données (122) faisant partie d'un plan de commande (31) de l'entité de station de base (111), et
- un deuxième dispositif de transmission de données (123) faisant partie d'un plan utilisateur (30) de l'entité de station de base (111),
ledit terminal de télécommunication (20) comprenant
- un autre premier dispositif de transmission de données (22) faisant partie d'un plan de commande (31) du terminal de télécommunication (20), et
- un autre deuxième dispositif de transmission de données (23) faisant partie d'un plan utilisateur (30) du terminal de télécommunication (20),
un canal radio de signalisation (225) étant prévu pour transmettre des données d'information de commande (220) transmises en tant que partie du plan de commande (31) ou à l'intérieur de celui-ci, un canal de transmission radio du plan utilisateur (235) étant prévu pour transmettre des données utilisateur (230) transmises en tant que partie du plan utilisateur (30) ou à l'intérieur de celui-ci,
ledit système étant configuré de telle sorte que
- un échange de données d'information de commande (220) pour configurer le canal de transmission radio du plan utilisateur (235) ou pour configurer une communication utilisant le canal de transmission radio du plan utilisateur (235) et/ou pour configurer le terminal de télécommunication (20) a lieu entre le premier dispositif de transmission de données (122) et l'autre premier dispositif de transmission de données (22), les données d'information de commande (220) échangées portant sur la configuration du canal de transmission radio du plan utilisateur (235) ou sur la configuration de la communication utilisant le canal de transmission radio du plan utilisateur (235), le système étant configuré de telle sorte que l'autre premier dispositif de transmission de données (22), en tant que partie du plan de commande du terminal de télécommunication, envoie un rapport de capacités générique en tant que partie des données d'information de commande (220) au premier dispositif de transmission de données (122), des capacités du plan utilisateur spécifiques du terminal de télécommunication (20) restant cachées au premier dispositif de transmission de données et n'étant pas incluses dans le rapport de capacités générique,
et que
- l'autre deuxième dispositif de transmission de données (23) du terminal de télécommunication (20) est configuré par l'autre premier dispositif de transmission de données (22) en fonction des données d'information de commande (220) et en fonction d'informations relatives aux capacités du plan utilisateur spécifiques du terminal de télécommunication (20),
le système étant configuré de telle sorte que l'autre deuxième dispositif de transmission de données (23) est configuré localement et à l'intérieur du terminal de télécommunication (20) et/ou la configuration du terminal de télécommunication (20) s'effectuant directement entre le premier dispositif de transmission de données (122) et l'autre premier dispositif de transmission de données (22) au moyen du canal radio de signalisation (225), et s'effectuant seulement indirectement entre le deuxième dispositif de transmission de données (123) et l'autre deuxième dispositif de transmission de données (23).

7. Terminal de télécommunication (20) destiné à la configuration d'une communication ou d'un canal de communication du terminal de télécommunication (20) dans un réseau de télécommunication (100) et/ou à la configuration du terminal de télécommunication (20) pour la fourniture d'au moins un service de communication dans un réseau de télécommunication (100) ou par l'intermédiaire d'un réseau de télécommunication (100), ledit terminal de télécommunication (20) étant prévu pour communiquer avec le réseau de télécommunication (100) par l'intermédiaire d'un réseau d'accès (110) comportant au moins une entité de station de base (111),
ledit terminal de télécommunication (20) comprenant
- un autre premier dispositif de transmission de données (22) faisant partie d'un plan de commande (31) du terminal de télécommunication (20), et
- un autre deuxième dispositif de transmission de données (23) faisant partie d'un plan utilisateur (30) du terminal de télécommunication (20),
un canal radio de signalisation (225) étant prévu pour transmettre des données d'information de commande (220) transmises en tant que partie du plan de commande (31) ou à l'intérieur de celui-ci, un canal de transmission radio du plan utilisateur (235) étant prévu pour transmettre des données utilisateur (230) transmises en tant que partie du plan utilisateur (30) ou à l'intérieur de celui-ci,
ledit terminal de télécommunication (20) étant configuré de telle sorte que
- un échange de données d'information de commande (220) pour configurer le canal de transmission radio du plan utilisateur (235) ou pour configurer une communication utilisant le canal de transmission radio du plan utilisateur (235) et/ou pour configurer le terminal de télécommunication (20) a lieu entre l'autre premier dispositif de transmission de données (22) et un premier dispositif de transmission de données (122) de ladite au moins une entité de station de base (111), les données d'information de commande (220) échangées portant sur la configuration du canal de transmission radio du plan utilisateur (235) ou sur la configuration de la communication utilisant le canal de transmission radio du plan utilisateur (235), le terminal de télécommunication (20) étant configuré de telle sorte que l'autre premier dispositif de transmission de données (22), en tant que partie du plan de commande du terminal de télécommunication, envoie un rapport de capacités générique en tant que partie des données d'information de commande au premier dispositif de transmission de données (122), des capacités du plan utilisateur spécifiques du terminal de télécommunication (20) restant cachées au premier dispositif de transmission de données et n'étant pas incluses dans le rapport de capacités générique,
et que
- l'autre deuxième dispositif de transmission de données (23) du terminal de télécommunication (20) est configuré par l'autre premier dispositif de transmission de données (22) en fonction des données d'information de commande (220) et en fonction d'informations relatives aux capacités du plan utilisateur spécifiques du terminal de télécommunication (20),
ledit terminal de télécommunication (20) étant configuré de telle sorte que l'autre deuxième dispositif de transmission de données (23) est configuré localement et à l'intérieur du terminal de télécommunication (20) et/ou la configuration du terminal de télécommunication (20) s'effectuant directement entre le premier dispositif de transmission de données (122) et l'autre premier dispositif de transmission de données (22) au moyen du canal radio de signalisation (225), et s'effectuant seulement indirectement entre le deuxième dispositif de transmission de données (123) et l'autre deuxième dispositif de transmission de données (23).

8. Système selon la revendication 6 ou terminal de télécommunication (20) selon la revendication 7, **caractérisé en ce que** la configuration de l'autre deuxième dispositif de transmission de données (23) s'effectue à l'intérieur du terminal de télécommunication (20) après que les données d'information de commande (220) ont déjà été transmises ou échangées entre l'entité de station de base (111) et le terminal de télécommunication (20).

9. Programme informatique comprenant des moyens de code de programme permettant d'exécuter les étapes d'un procédé selon l'une des revendications 1 à 5, lorsque le programme informatique est exécuté sur un dispositif programmable, notamment en tant que partie du système, ou sur le terminal de télécommunication (20).

10. Produit de programme informatique comprenant un support lisible par ordinateur et un programme informatique stocké sur ledit support lisible par ordinateur et comportant des moyens de code de programme pour configurer une communication ou un canal de communication d'un terminal de télécommunication (20) dans un réseau de télécommunication (100) et/ou pour configurer un terminal de télécommunication (20) pour la fourniture d'au moins un service de communication dans un réseau de télécommunication (100) ou par l'intermédiaire d'un réseau de télécommunication (100), lesquels sont aptes à permettre l'exécution des étapes d'un procédé selon l'une des revendications 1 à 5, lorsque le programme informatique est exécuté sur un dispositif programmable, notamment en tant que partie du réseau de télécommunication (100) ou sur le terminal de télécommunication (20).
